# EUROPÄISCHE PATENTSCHRIFT

(11) **EP 0 874 743 B1**
(45) Veröffentlichungstag und Bekanntmachung des Hinweises auf die Patenterteilung: **16.08.2001**
(21) Anmeldenummer: 97901003.0
(22) Anmeldetag: 11.01.1997
(51) Int. Cl.: B60R 19/48, G01S 15/93

(54) **ÜBERLACKIERBARER STOSSFÄNGER MIT ULTRASCHALLWANDLER**
OVERCOATABLE BUMPER WITH ULTRASOUND TRANSDUCER
PARE-CHOCS POURVU D'UN TRANSDUCTEUR A ULTRASONS ET POUVANT ETRE REVETU D'UNE PEINTURE

(30) Priorität: 20.01.1996 DE 19601987
(43) Veröffentlichungstag der Anmeldung: 04.11.1998
(73) Patentinhaber: Valeo Schalter und Sensoren GmbH, 74321 Bietigheim-Bissingen (DE)
(72) Erfinder: MÜLLER, Harry, D-71711 Steinheim (DE); MATHES, Joachim, D-74080 Heilbronn (DE)
(74) Vertreter: Dreiss, Fuhlendorf, Steimle & Becker
(86) Internationale Anmeldenummer: EP9700110
(87) Internationale Veröffentlichungsnummer: WO9726155

(56) Entgegenhaltungen:
- DE-A- 3 942 248
- GB-A- 2 287 917
- US-A- 4 636 997

## Beschreibung

Die Erfindung betrifft einen vorzugsweise überlackierbaren Stoßfänger gemäß dem Oberbegriff des Anspruchs 1 oder des Anspruchs 6.

Für Abstandswarneinrichtungen, Parkhilfen und ähnliches werden im wachsenden Maße Ultraschallwandler in die Stoßfänger eines Kraftfahrzeugs eingefügt. Hierzu muß der serienmäßig hergestellte Stoßfänger für die Aufnahme des Ultraschallwandlers vorbereitet werden. Dies geschieht durch Bohren einer Öffnung und Einfügen eines Halters, welcher wiederum den Ultraschallwandler aufnimmt. Der Halter wird dabei vielfach unlösbar mit dem Stoßfänger verschweißt. Es sind auch wie in der DE-A-195 28 474 beschrieben, auswechselbare Halteeinrichtungen vorgeschlagen worden, durch welche Wandler unterschiedlicher Abmessungen an die gleichbleibende Aufnahmeöffnung eines Stoßfängers angepaßt werden können.

Bei Kraftfahrzeugen wird immer mehr dazu übergegangen, auch die Stoßfänger zu lackieren. Nachteilig bei den bekannten Stoßfängern, die mit einem Halter zur Aufnahme eines Ultraschallwandlers versehen sind, ist es, daß diese vergleichsweise viele enge Trennfugen besitzen, die beim Überlackieren ein wenig ansprechendes Erscheinungsbild bieten. Zum anderen neigen die aufeinanderstoßenden Grenzflächen der Trennfugen dazu, daß die Farbe entlang der Grenzfläche kriecht und dann aushärtet.

Aus der DE-A-34 41 684, die den nächstkommenden Stand der Technik bildet, ist ein Stoßfänger mit einem Halter zur Aufnahme eines Ultraschallwandlers gemäß den Oberbegriffen der Ansprüche 1 und 6 bekannt.

Aufgabe der Erfindung ist es, neuartige Ausgestaltungen von Haltern für Stoßfänger anzugeben, welche für das Lackieren des Stoßfängers besonders vorteilhaft sind.

Die Aufgabe wird durch einen Stoßfänger gelöst, der die Merkmale des Anspruchs 1 aufweist.

Eine erste Lösung der Aufgabe besteht im Prinzip also darin, ein erstes Halterteil von Anfang an einstückig mit dem Stoßfänger zu verbinden und dann später ein zweites Halterteil unlösbar an das erste Halterteil anzubinden. Der Vorteil besteht dabei darin, daß es möglich ist, beispielsweise nach den Merkmalen gemäß Anspruch 2 das erste Halterteil unmittelbar an den Stoßfänger schon bei dessen Fertigung anzugießen, wobei das erste Halterteil relativ einfach aufgebaut ist. Hierdurch werden an die Gießformen des Stoßfängers keine besonderen Anforderungen gestellt, weil die beispielsweise aus der DE-A-195 28 474 bekannten Verbindungselemente zwischen Halter und Wandlergehäuse nicht direkt mit an den Stoßfänger angegossen werden. Insofern werden hier keine besonderen Vorleistungen für den Fall erbracht, daß der Stoßfänger ohne Ultraschallwandler ausgeliefert werden soll und die Stoßfängerform wird durch das Anfügen des ersten Halterteils nur unwesentlich komplizierter. Dabei kann die zur Aufnahme des Wandlergehäuses notwendige Öffnung im Stoßfänger entweder sofort beim Gießvorgang des Stoßfängers berücksichtigt werden oder diese Öffnung auch erst nachträglich für das Bestücken des Wandlers herausgeschnitten werden. Der wesentliche Vorteil dieser Erfindungslösung besteht darin, daß eine sichtbare Trennfuge zwischen Stoßfänger und Halter an der sichtbaren Oberfläche des Stoßfängers vermieden wird, die andernfalls beim nachträglichen Einschweißen des gesamten Halters in den Stoßfänger auftritt.

Ein weiterer Vorteil besteht darin, daß das später angefügte zweite Halterteil eine gewisse Adapterfunktion übernehmen kann, in dem es beispielsweise in der Lage ist, die Außenabmessungen unterschiedlicher Wandler an die Innenabmessungen des ersten Halteteils anzupassen. Hierzu ist es nur notwendig, einen ringförmigen Vorsprung des zweiten Halterteils bis zum am Stoßfänger sichtbaren Ende des Wandlergehäuses vorzuziehen, wobei der Innendurchmesser des zweiten Gehäuseteils jeweils dem Außendurchmesser des zugeordneten Wandlergehäuses entspricht.

Um die beiden Halterteile dauerhaft miteinander zu verbinden, empfehlen sich in Weiterbildung der Erfindung die in Anspruch 3 geschilderten Maßnahmen.

Um die Verbindungsfläche zwischen den beiden Halterteilen zu vergrößern, ist es günstig, die Merkmale nach Anspruch 4 anzuwenden. Dabei sorgen die beiden einander zugeordneten Verbindungselemente (Vorsprung und Rücksprung) sowohl für eine Zentrierung als auch für eine Vergrößerung der Verbindungsfläche. Wie weiter oben geschildert, kann aber auch die Verwendung einander zugeordneter Stufen in den beiden Halteteilen zu einer vorteilhaften Lösung führen, die gleichzeitig eine gewisse Adapterfunktion ausüben kann.

Ein besonders einfacher Aufbau für den mit einem Halter versehenen Stoßfänger ergibt sich durch die Merkmalskombination nach Anspruch 5. Danach begrenzt der Ansatz ein einfaches Durchgangsloch durch den Stoßfänger. Eine Befestigung des Wandlergehäuses erfolgt durch eine Verrastung innerhalb des kompliziert ausgestalteten, an das erste Halteteil später angefügten zweiten Halterteils.

Eine zweite Lösung der Aufgabenstellung ist durch den erfindungsgemäßen Stoßfänger mit den Merkmalen des Anspruchs 6 gegeben.

Im Prinzip bedeutet das, daß die Durchgangöffnung des Halters mit einer nach innen vorspringenden Konsole versehen ist, die als Blende zur Abdeckung der Randbereiche des Wandlers dient. Da im radial äußeren Randbereich des Wandlers zum einen die Querschnittsfläche des Wandlergehäuses und zum anderen die die Gehäuseinnenfläche mit der Außenfläche des Resonators verbindende Dichtung liegt, können durch den konsolenartigen Vorsprung sowohl die Querschnittsfläche des Gehäuses als auch eine ringförmige Teilfläche der Dichtung abgedeckt werden, so daß hier zwei Trennfugen durch den Vorsprung überdeckt werden. Dabei ist es gleichzeitig möglich, die Gehäuseform zu vereinfachen, die andernfalls einen ebenfalls nach innen weisenden Vorsprung aufweisen müßte, um die Dichtung gegenüber dem Gehäuse zu sichern. Vorteilhafte Einzelheiten hierzu sind in der Merkmalskombination nach Anspruch 7 aufgeführt. Um die Abstrahlwirkung des Resonators und dessen optisches Aussehen zu verbessern, empfiehlt sich in Weiterbildung die Anwendung der Merkmale nach Anspruch 8. Dabei ist der Resonator gegenüber der Dichtung so weit vorgezogen, daß die Vorderkante des Resonators mit der Stirnkante des Vorsprungs abschließt, so daß diese auf gleicher Höhe liegen. Es ist in diesem Fall darauf zu achten, daß ein hinreichender Abstand zwischen der Mantelfläche des Resonators und der Innenfläche des Vorsprungs vorhanden ist, um zu verhindern, daß die beiden Teile durch eine eindringende dünne Farbschicht miteinander verklebt werden, so daß der Wandler nur noch schwer ausgetauscht werden kann.

Um die Abstrahlwirkung des Resonators noch weiter zu verbessern, empfiehlt sich in Weiterbildung der Erfindung die Merkmalskombination nach Anspruch 9. Danach ist der die Membran umgebende Bereich des Stoßfängers einschließlich des Vorsprungs trichterförmig ausgestaltet, so daß sich eine vorteilhafte Strahlungsdichte ergibt. Eine vorteilhafte Weiterbildung der Erfindung kann sich durch Anwendung der Merkmale gemäß Anspruch 6 bis 9 auf die Merkmale 1 bis 5 ergeben. Im Prinzip bedeutet das, daß auch bei der zweiten Lösung ein Teil des Halters einstückig mit dem Stoßfänger verbunden sein kann, so daß sich die im Zusammenhang mit den Ansprüchen 1 bis 5 beschriebenen zusätzlichen Vorteile ergeben. Es werden also nicht nur die Trennfugen vermieden, die sich durch den Einbau eines Halters in den Stoßfänger ergeben, sondern es werden auch zum Teil die Trennfugen des Wandlers selbst abgedeckt und gleichzeitig die Konstruktion des Wandlers vereinfacht. Hinsichtlich der Anforderungen an die Gußform für den Stoßfänger ergibt sich wiederum das oben Gesagte, so daß die Gußform trotz der Vermeidung mehrerer Trennfugen recht einfach ausgestaltet werden kann.

Ausführungsbeispiele der Erfindung werden nachfolgend anhand der Zeichnung erläutert. Darin zeigt:
- Fig. 1: den Aufbau eines an sich bekannten Stoßfängers,
- Fig. 2: einen Stoßfänger in stark vereinfachter Darstellung, bei dem der Halter aus einem ersten Halterteil und einem zweiten Halterteil zusammengesetzt ist,
- Fig. 3: in verkleinerter räumlicher Darstellung das zweite Halterteil nach Fig. 2,
- Fig. 4: einen Halter mit einem trennfugenabdeckenden Vorsprung und
- Fig. 5: in vergrößerter räumlicher Darstellung den in Fig. 4 schematisch dargestellten Wandler.

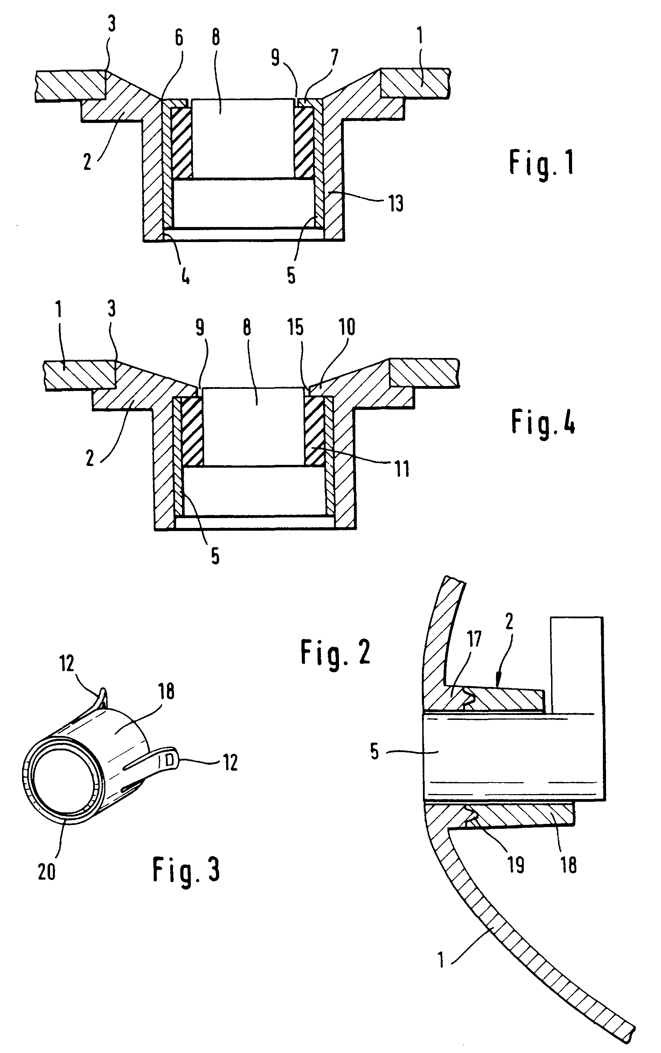

In der schematischen Skizze nach Fig. 1 ist in den herausgebrochen gezeigten Stoßfänger 1 ein Halter 2 eingesetzt und mit dem Stoßfänger 1 verschweißt oder verklebt. Zwischen Stoßfänger 1 und Halter 2 entsteht eine erste Trennfuge 3. Der Halter 2 besitzt eine Durchgangsöffnung 4, in der das Gehäuse 5 eines Ultraschallwandlers eingesetzt ist. Dabei ist das Wandlergehäuse 5 mit dem Halter 2 in geeigneter Weise verrastet. Die Möglichkeiten zur Verrastung sind beispielsweise in der 195 28 474.7 beschrieben und sollen an dieser Stelle nicht nochmals erläutert werden. Wesentlich ist, daß bei der bekannten Anordnung des Halters außer der ersten Trennfuge 3 zwischen Wandlergehäuse 5 und Innenwand der Durchgangsöffnung 4 eine zweite Trennfuge 6 und zwischen der Radialwand 7 und der Mantelfläche des Resonators 8 eine dritte Trennfuge 9 vorgesehen ist. Ein derartiger Aufbau läßt sich erfindungsgemäß dadurch vereinfachen, daß entsprechend Fig. 4 an dem Halter 2 ein radialer Vorsprung (Konsole) 10 vorgesehen wird, welcher als Blende wirkt und die Stirnfläche des Wandlergehäuses 5 sowie einen Teil der Dichtung 11 abdeckt, welcher den Resonator 8 elastisch an der Innenwand des Wandlergehäuses 5 aufhängt. Hierdurch wird zum einen eine Trennfuge 6 vermieden und es wird weiterhin das Gehäuse 5 einfacher aufgebaut, indem der Vorsprung 10 als Anschlag für das Gehäuse 5 und die Dichtung 11 wirkt, so daß die Radialwand 7 (Fig. 1) des Gehäuses 5 eingespart werden kann. Zudem ist darauf zu achten, daß die dritte Trennfuge 9 nicht so schmal wie bei der bekannten Anordnung nach Fig. 1 ausgestaltet wird, da sie sich andernfalls leicht mit Farbe beim Lackieren füllt und das Herauslösen des Wandlers aus dem Halter behindert.

Es bleibt also festzuhalten, daß bei der erfindungsgemäßen Anordnung gemäß Fig. 2 die Trennfuge 6 eingespart wird, bei der Trennfuge 9 ein Vollsetzen dieser Fuge durch Überlackieren vermieden und schließlich die Ausgestaltung des Wandlergehäuses 5 vereinfacht wird.

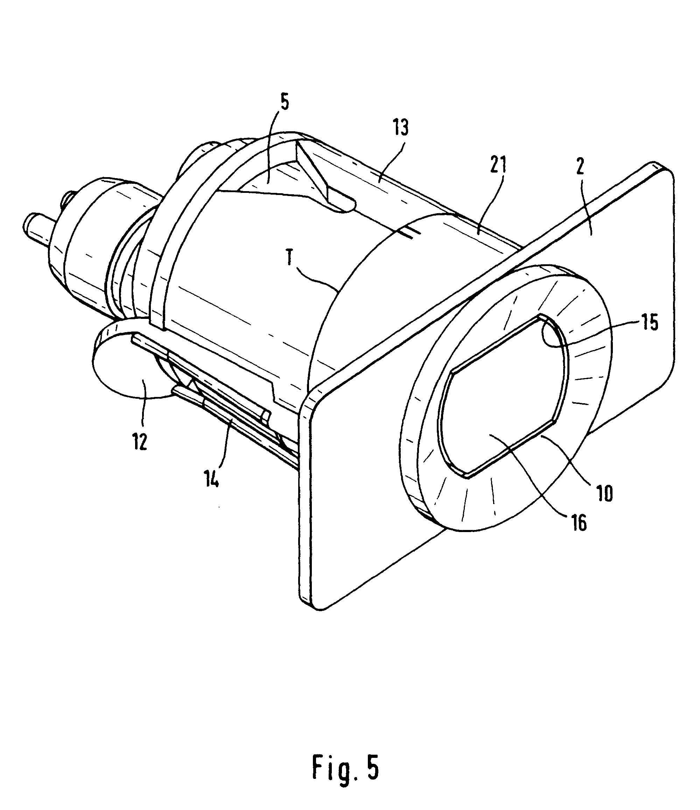

Fig. 5 zeigt in vergrößerter und räumlicher Darstellung eine mögliche Ausführung des Halters nach Fig. 4, in dem auch Rastlaschen 12 dargestellt sind, welche eine Verrastung des Wandlergehäuses 5 gegenüber der Mantelfläche 13 des Halters 2 ermöglichen. Wie aus Fig. 5 ersichtlich, sind die Rastlaschen 12 durch eingespritzte Federbeine 14 verstärkt, um ein Herausrutschen des Wandlers 5 aus dem Halter 2 sicher zu verhindern. Wie aus Fig. 5 ersichtlich, umgrenzt der Vorsprung 10 eine Durchtrittsfläche 15, in welche eine Teilfläche 16 des Resonators ragt. Diese kann an sich kreisrund sein, ist aber im vorliegenden Fall zur Erzeugung einer geeigneten Strahlungskeule derart ausgestaltet, daß die Teilfläche 16 aus einer Kreisfläche durch Entfernen zweier seitlicher Kreissektoren gebildet ist.

Fig. 2 zeigt eine weitere Möglichkeit, wie eine andere Trennfuge (zusätzlich) vermieden werden kann. Dabei ist an den Stoßfänger 1 ein aus zwei Halterteilen aufgebauter Halter angeschlossen. Für die Erfindung wichtig dabei ist, daß das erste Halterteil 17 einstückig an den Stoßfänger 1 angegossen ist, so daß die aus den Fig. 1 und 2 ersichtliche Trennfuge 3 entfällt. Der Grund, den Halter 2 aus einem ersten Halterteil 17 und einem zweiten Halterteil 18 aufzubauen, besteht darin, daß wie aus Fig. 5 ersichtlich, das hintere zweite Halterteil 18 durch die vorgesehenen Rastlaschen und mögliche Bajonettverschlüsse relativ kompliziert aufgebaut ist und diese komplizierte Formgebung von der Gußform des Stoßfängers ferngehalten werden soll. Eine derartige Vorleistung in der Gießform ist u.U. nicht wirtschaftlich, da nicht alle Fahrzeuge mit Wandlern in dem Stoßfänger ausgerüstet werden. Im übrigen kann das zweite Halterteil 18 hinsichtlich unterschiedlicher Abmessungen bei dem Wandlergehäuse 5 eine gewisse Adapterfunktion übernehmen, indem das zweite Halterteil an die Außenfläche des Wandlergehäuses 5 angepaßt ist und gleichzeitig eine entsprechende Schnittstelle gegenüber dem ersten Halterteil 17 besitzt, so daß diese beiden Teile dann mit unterschiedlichen Wandlern versehen, zusammengefügt werden können. Der kompliziertere Aufbau des zweiten Halterteils 18 des Halterteils 2 ist in Fig. 3 angedeutet.

Für die Erfindung wichtig ist auch die Anwendung eines zentrierenden Vorsprungs 19 am ersten Halterteil 17, der an den zentrierenden Rücksprung 20 (siehe Fig. 3) des zweiten Halterteils 18 angepaßt ist. Durch das Ineinanderfügen von Vorsprung 19 und Rücksprung 20 erhält man eine größere Verbindungsfläche und gleichzeitig eine Zentrierung der beiden Halterteile gegeneinander. Die Verwendung zugeordneter Vorund Rücksprünge, die hinsichtlich erstem und zweitem Halterteil auch vertauscht sein können, läßt sich eine gewisse Schlüsselfunktion erreichen, indem sich nur diejenigen Halterteile zusammenfügen lassen, die zueinander gehören, so daß hier auch eine Sicherung gegen eine Bestückung mit falschen Wandlern erreicht werden kann.

Die Ausgestaltung nach Fig. 2 läßt sich auch mit der Ausgestaltung nach Fig. 4 kombinieren, so daß sich hierdurch zwei Trennfugen vermeiden lassen und sich die Vorteile aus beiden Konstruktionen kombinieren lassen. Der sich so ergebende Stoßfänger mit bestücktem Halter und eingefügtem Wandler ist daher besonders gut für eine Lackierung geeignet. Eine mögliche Trennlinie ist in Fig. 5 durch T angedeutet.

## Patentansprüche

1. Stoßfänger (1) mit einem Halter (2) zur Aufnahme eines Ultraschallwandlergehäuses (5), **dadurch gekennzeichnet,** daß der Halter (2) zweigeteilt ist und die beiden Halterteile (17,18) in Längsrichtung des aufzunehmenden Ultraschallwandlergehäuses (5) hintereinander angeordnet sind, wobei das dem Stoßfänger (1) zugewandte erste Halterteil (17) einstückig mit dem Stoßfänger (1) verbunden ist und daß das dem Stoßfänger (1) abgewandte zweite Halterteil (18) mit dem ersten Halterteil (17) verbunden ist.

2. Stoßfänger nach Anspruch 1, dadurch **gekennzeichnet**, daß das erste Halterteil (17) ein an den Stoßfänger (1) angegossener, im wesentlichen hohlzylinderförmiger Ansatz ist.

3. Stoßfänger nach Anspruch 1 oder 2, dadurch **gekennzeichnet,** daß die einander zugeordneten Ränder der beiden Halterteile (17, 18) miteinander verschweißt, verklebt oder verrastet sind.

4. Stoßfänger nach Anspruch 2 oder 3, dadurch **gekennzeichnet,** daß der Ansatz (17) an seinem dem Stoßfänger (1) abgewandten Rand einen vorzugsweise umlaufenden Vorsprung (19) bzw. Rücksprung besitzt, dem ein entsprechender Rücksprung (20) bzw. Vorsprung auf dem zugeordneten Rand des zweiten Halterteils (18) entspricht.

5. Stoßfänger nach einem der Ansprüche 2 bis 4, dadurch **gekennzeichnet,** daß der Ansatz den Rand einer in den Stoßfänger (1) eingegossenen Durchgangsöffnung zur Aufnahme des Ultraschallwandlergehäuses (5) begrenzt.

6. Stoßfänger (1) mit einem Halter (2) zur Aufnahme eines einen Ultraschallwandler enthaltenden Ultraschallwandlergehäuses (5), wobei der Halter (2) eine das Ultraschallwandlergehäuse (5) aufnehmende duchgehende Öffnung (4) besitzt und an dem Stoßfänger (1) befestigt ist, **dadurch gekennzeichnet,** daß an dem Halter (2) in Höhe des stoßfängerseitigen Abschlusses der durchgehenden Öffnung (4) eine einen Anschlag für das in die durchgehende Öffnung einschiebbare Ultraschallwandlergehäuses bildende umlaufende Konsole (10) vorgesehen ist.

7. Stoßfänger nach Anspruch 6, dadurch **gekennzeichnet,** daß das Ultraschallwandlergehäuse (5) ein im wesentlichen hohlzylinderförmiges Gehäuse aufweist, in welches über eine ringförmige Dichtung (11) ein Resonator (8) des Ultraschallwandlergehäuses (5) aufgehängt ist und daß der Resonator (8) nur mit derjenigen Teilfläche in eine durch die Konsole begrenzte Durchtrittsfläche (15) ragt, die für die Abstrahlung der Ultraschallwellen vorgesehen ist und die Stirnfläche der Dichtung überragt.

8. Stoßfänger nach einem der vorangegangenen Ansprüche, dadurch **gekennzeichnet,** daß die Stirnfläche des Resonators im wesentlichen mit der Vorderfläche des Stoßfängers (1) abschließt.

9. Stoßfänger nach einem der vorangegangenen Ansprüche, dadurch **gekennzeichnet,** daß die Stirnfläche des Halters (2) trichterförmig nach innen geneigt ist, wobei der äußere Halterrand ungefähr in der Ebene der Vorderfläche des Stoßfängers (1) und der innere Halterand ungefähr in der Ebene der Stirnfäche des Resonators (8) liegt.

10. Stoßfänger nach einem der Ansprüche 6 bis 9, dadurch **gekennzeichnet,** daß zumindest ein dem Stoßfänger (1) zugewandter Abschnitt des Halters (21) in den Stoßfänger (1) integriert ist, vorzugsweise einstückig mit dem Stoßfänger (1) vergossen ist.

## Claims

1. Bumper (1) with a holder (2) for acceptance of an ultrasound transducer housing (5), characterized in that the holder (2) has two parts and that the two holder segments (17, 18) are arranged in series in the longitudinal direction of the ultrasound transducer housing (5) being accepted, where the first holder segment (17), which faces the bumper (1), is connected to the bumper (1) in one piece, and that the second holder segment (18), which faces away from the bumper (1), is preferably permanently connected to the first holder segment (17).

2. Bumper according to claim 1, characterized in that the first holder segment (17) is an essentially hollow cylinder-shaped projection integrally cast to the bumper (1).

3. Bumper according to claim 1 or 2, characterized in that the corresponding edges of the two holder segments (17, 18) are welded, glued or locked together.

4. Bumper according to claim 2 or 3, characterized in that the projection (17) features, on its edge facing away from the bumper (1), a preferably circumferential projection (19) or recess that matches a corresponding recess (20) or projection on the corresponding edge of the second holder segment (18).

5. Bumper according to one of claims 2 to 4, characterized in that the projection adjoins the edge of a clearance opening, integrally cast into the bumper, for acceptance of the ultrasound transducer housing (5).

6. Bumper (1) with a holder (2) for acceptance of an ultrasound transducer housing (5) having an ultrasound transducer, with the holder (2) featuring a through opening (4) for acceptance of the ultrasound transducer housing (5) and is attached to the bumper (1), characterized in that a circumferential console (10), which forms a limit stop for the ultrasound transducer housing (5), which can be inserted into the through opening, is provided at the point at which the through opening (4) ends on the bumper side.

7. Bumper according to claim 6, characterized in that the ultrasound transducer housing (5) exhibits an essentially hollow cylinder-shaped casing in which a resonator (8) of the ultrasound transducer housing (5) is suspended by means of an annular seal (11), and that the only portion of the resonator (8) that protrudes into a clearance surface (15) limited by the console is that which is provided for radiation of the ultrasound waves and rises above the face of the seal.

8. Bumper according to one of the preceding claims, characterized in that the face of the resonator essentially concludes with the front surface of the bumper (1).

9. Bumper according to one of the preceding claims, characterized in that the face of the holder (2) slants in the shape of a funnel toward the interior, with the outer holder edge being positioned approximately in the plane of the front surface of the bumper (1) and the inner holder edge being positioned approximately in the plane of the face of the resonator (8).

10. Bumper according to one of claims 6 to 9, characterized in that at least one section of the holder (21) facing the bumper (1) is integrated into the bumper (1), and is preferably integrally cast with the bumper (1).

## Revendications

1. Pare-chocs (1) comportant un support (2) destiné à recevoir un boîtier de transducteur à ultrasons (5), caractérisé en ce que le support (2) est divisé en deux et les deux parties de support (17, 18) sont disposées l'une derrière l'autre dans la direction longitudinale du boîtier de transducteur à ultrasons (5) à loger, la première partie de support (17), tournée vers le pare-chocs (1), étant reliée d'une seule pièce au pare-chocs (1) et en ce que la deuxième partie de support (18), tournée à l'opposé du pare-chocs (1), est reliée à la première partie de support (17).

2. Pare-chocs selon la ravendication 1, caractérisé en ce que la première partie de support (17) est un appendice sensiblement en forme de cylindre creux, coulé sur le pare-chocs (1).

3. Pare-chocs selon la revendication 1 ou 2, caractérisé en ce que les bords associés l'un à l'autre des deux parties de support (17, 18) sont soudés, collés ou enclenchés l'un à l'autre.

4. Pare-chocs selon la revendication 2 ou 3, caractérisé en ce que l'appendice (17) présente, sur son bord tourné à l'opposé du pare-chocs (1), une saillie (19) de préférence périphérique ou un retrait à laquelle ou auquel correspond un retrait (20) correspondant ou une saillie sur le bord correspondant de la deuxième partie de support (18).

5. Pare-chocs selon l'une des revendications 2 à 4, caractérisé en ce que l'appendice délimite le bord d'une ouverture de passage, coulée dans le pare-chocs (1) et destinée à recevoir le boîtier de transducteur à ultrasons (5).

6. Pare-chocs (1) avec un support (2) destiné à recevoir un boîtier de transducteur à ultrasons (5) qui contient un transducteur à ultrasons, le support (2) présentant une ouverture (4) traversante qui reçoit le boîtier de transducteur à ultrasons (5), et étant fixé au pare-chocs (1), caractérisé en ce qu'il est prévu sur le support (2), à hauteur de la fermeture côté pare-chocs de l'ouverture traversante (4), une console (10) périphérique qui forme une butée pour le boîtier de transducteur à ultrasons à introduire dans l'ouverture traversante.

7. Pare-chocs selon la revendication 6, caractérisé en ce que le boîtier de transducteur à ultrasons (5) comporte un boîtier sensiblement en forme de cylindre creux, dans lequel est suspendu, par l'intermédiaire d'une garniture d'étanchéité (11) de forme annulaire, un résonateur (8) du boîtier de transducteur à ultrasons (5), et en ce que le résonateur (8) ne s'engage dans une surface de passage (15) limitée par la console, que par la surface partielle qui est prévue pour le rayonnement des ondes d'ultrasons et qui dépasse de la face frontale de la garniture d'étanchéité.

8. Pare-chocs selon l'une des revendications précédentes, caractérisé en ce que la face frontale du résonateur est sensiblement à fleur de la face avant du pare-chocs (1).

9. Pare-chocs selon l'une des revendications précédentes, caractérisé en ce que la face frontale du support (2) est inclinée en forme de cone vers l'intérieur, le bord extérieur du support se situant approximativement dans le plan de la face avant du pare-chocs (1), et le bord intérieur du support se situant approximativement dans le plan de la face frontale du résonateur (8).

10. Pare-chocs selon l'une des reyendications 6 à 9, caractérisé en ce qu'au moins une part (21) du support, tourné vers le pare-chocs (1), est intégrée dans le pare-chocs (1), de préférence coulée d'une seule pièce avec le pare-chocs (1).
